# EUROPEAN PATENT APPLICATION

(11) **EP 4 492 065 A1**
(43) Date of publication of application: **15.01.2025**
(21) Application number: 22931062.8
(22) Date of filing: 26.12.2022
(51) Int. Cl.: G01N 35/02

(54) **AUTOMATIC ANALYSIS DEVICE**

(30) Priority: 07.03.2022 JP 2022034349
(71) Applicant: HITACHI HIGH-TECH CORPORATION, Tokyo 105-6409 (JP)
(72) Inventor: KIKUCHI Satoshi, Tokyo 105-6409 (JP); NODA Kazuhiro, Tokyo 105-6409 (JP); TAKAKURA Tatsuki, Tokyo 105-6409 (JP); TANOUE Hidetsugu, Tokyo 105-6409 (JP)
(74) Representative: MERH-IP Matias Erny Reichl Hoffmann Patentanwälte PartG mbB
(86) International application number: PCT/JP2022/048012
(87) International publication number: WO 2023/171092

(57) **Abstract**

To provide an automatic analyzer capable of suppressing deterioration in throughput for an analysis process. An automatic analyzer for executing an analysis process using multiple kinds of consumables including a first consumable and a second consumable. The automatic analyzer is provided with multiple readers including a first reader and a second reader, which are capable of reading identification information of the consumable, and a control section for controlling an operation of the automatic analyzer. The control section has a first reading mode and a second reading mode. The first reading mode allows the first reader to read identification information of the first consumable, and allows the second reader to read identification information of the second consumable. The second reading mode allows the first reader to read identification information of both the first and the second consumables.

## Description

### Technical Field

The present invention relates to an automatic analyzer.

### Background Art

The automatic analyzer is configured to measure optical properties of a reaction liquid generated by reaction between a specimen (sample) and a reagent in a reaction vessel, and analyze concentration of a target component of the specimen based on the measurement result. Different kinds of assay reagents are selectively used for generating the reaction liquid in accordance with the target component to be analyzed. Several kinds of system reagents are used for cleaning a flow passage of the automatic analyzer. Patent Literature 1 discloses the automatic analyzer which reads the identifier attached to a liquid storing container.

### Citation List

### Patent Literature

Patent Literature 1: International Publication No. WO 2015/045461

### Summary of Invention

### Technical Problem

A generally employed art as described above is designed to simplify the information registering operation by restricting each reading target of respective readers. In the case where one of the readers fails to read the information because of the failure that occurs therein, operations of the automatic analyzer are obstructed. This may cause the problem of considerable deterioration in throughput for an analysis process.

The present invention has been made in consideration of the above-described circumstance. It is an object of the present invention to provide the automatic analyzer capable of suppressing deterioration in throughput for the analysis process.

### Solution to Problem

The present invention includes multiple measures for solving the above-described problem. As a typical example, the present invention provides the automatic analyzer for executing an analysis process using multiple kinds of consumables including a first consumable and a second consumable. The automatic analyzer is provided with the multiple readers including a first reader and a second reader, which are allowed to read identification information of the consumable, and a control section for controlling an operation of the automatic analyzer. The control section has a first reading mode which allows the first reader to read identification information of the first consumable, and the second reader to read identification information of the second consumable, and has a second reading mode which allows the first reader to read identification information of both the first and the second consumables.

### Advantageous Effects of Invention

The present invention allows suppression of stagnation of the identification information reading, and suppression of deterioration in throughput for the analysis process.

### Brief Description of Drawings

Fig. 1 is a schematic view of an overall structure of an automatic analyzer.
Fig. 2 illustrates an example of an identification piece applied to a reagent container.
Fig. 3 illustrates an example of an identification piece applied to a reagent container.
Fig. 4 illustrates an example of an identification piece applied to a system reagent container.
Fig. 5 illustrates an example of an identification piece applied to a reaction vessel tray.
Fig. 6 illustrates a relationship between a reader and a reading object in a first reading mode.
Fig. 7 illustrates a relationship between a reader and a reading object in a second reading mode.
Fig. 8 is a flowchart representing content of a consumable registration process upon selection from the first reading mode to the second reading mode in a first embodiment.
Fig. 9 is a flowchart representing content of a consumable registration process upon selection from the first reading mode to the second reading mode in a second embodiment.

### Description of Embodiments

Embodiments of the present invention will be described with reference to the drawings. The embodiment is exemplified as the composite type automatic analyzer adapted to perform the immunological test and the biochemical test. However, the present invention may be applied to other types of automatic analyzers so long as multiple readers are provided.

### <First Embodiment>

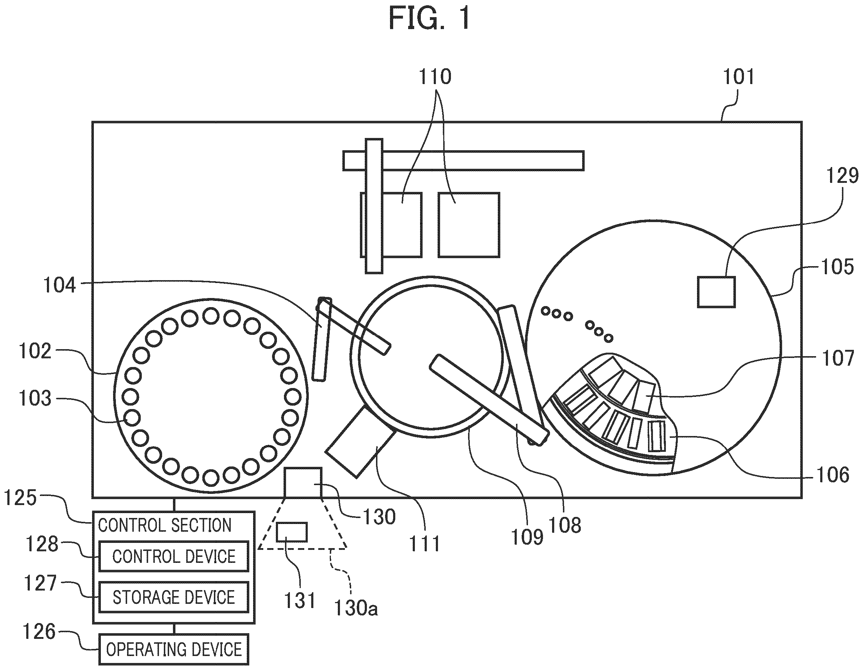

The first embodiment according to the present invention is described with reference to Figs. 1 to 8.

Fig. 1 is a schematic view of an overall structure of an automatic analyzer.

Referring to Fig. 1, an automatic analyzer 101 is an apparatus for analyzing a sample using a reagent adapted to the predetermined analysis item, and includes a sample mount disc 102, a sample dispensing mechanism 104, a reagent storage 105, a reagent dispensing mechanism 108, an incubator (reaction disc) 109, a reaction vessel tray 110, a biochemical detection unit 111, a control section 125, an operating device 126, and readers 129 and 130.

The sample mount disc 102 is configured to have multiple sample containers 103 each storing the sample mounted in an annular arrangement. When dispensing the sample into a reaction cell or a reaction vessel on the incubator 109 from the sample container 103, the sample mount disc 102 rotates to transport the sample container 103 as a dispensing target to a sample aspiration position (access position of the sample dispensing mechanism 104).

The reagent storage 105 is a mechanism for storing the reagent container that stores the reagent, and includes a reagent disc 106 and a reagent container holder 107. The reagent storage 105 has a cold insulation function to improve on-board stability of the reagent property.

Multiple reagent container holders 107 are placed on the reagent disc 106 in a double annular arrangement, each of which holds the reagent container so that multiple reagent containers can be held. The reagent disc 106 has a rotary drive mechanism that rotates to move those reagent containers to the predetermined circumferential positions, respectively.

The reagent storage 105 is provided with the reader 129 (second reader) that reads the identification information from an identification piece (to be described later) provided on the reagent container (assay reagent). The reader 129 is formed into a wireless device.

The incubator 109 is a mechanism that causes a reaction between the sample and the reagent under the temperature control adapted to facilitate the reaction between the sample and the reagent. The incubator 109 has multiple reaction cells placed in the annular arrangement, and is rotated by the rotary drive mechanism so that each of the reaction cells is moved to the predetermined circumferential position.

Multiple unused reaction vessels are placed on the reaction vessel tray 110 to mix the sample and the reagent for reaction therebetween.

The sample dispensing mechanism 104 is composed of the rotary drive mechanism, a vertical drive mechanism, and a dispensing probe. The rotary drive mechanism and the vertical drive mechanism move the dispensing probe between a sample aspiration position (access position of the sample dispensing mechanism 104) on the sample mount disc 102 and a sample discharge position on the incubator 109 and a sample discharge position 118. In other words, the sample dispensing mechanism 104 aspirates a predetermined amount of the sample from the sample container 103 which has been transported to the sample aspiration position on the sample mount disc 102, and discharges the sample into the reaction cell which has been transported to the sample discharge position on the incubator 109, or the reaction vessel which has been transported to the sample discharge position 118.

The reader 130 (second reader) is configured to read the identification information from the identification piece (to be described later) provided on a consumable 131 used for the automatic analyzer 101 (for example, the reaction vessel (reaction vessel tray 110), system reagent bottle, and the like), and includes a reading range 130a at a position (front surface of the automatic analyzer 101) to be accessible by an operator who operates the automatic analyzer 101. The reader 130 is formed into the wireless device. The reader 130 is formed into a wireless device.

The process flow of biochemical analysis is described as a representative example.

When performing the biochemical analysis, the sample dispensing mechanism 104 dispenses a predetermined amount of sample to a predetermined reaction cell on the incubator 109.

Then, the incubator 109 rotates to move the reaction cell into which the sample has been discharged to an access position of the reagent dispensing mechanism 108 so that a predetermined amount of reagent is dispensed to the reaction cell into which the sample has been discharged.

Upon completion of the reaction process between the sample and the reagent on the incubator 109, the incubator 109 rotates to move the reaction cell that stores the reaction liquid after the end of the reaction to a position at which the biochemical detection unit 111 is mounted.

Then a detection section in the biochemical detection unit 111 performs measurement of a reaction signal.

The control section 125 and the operating device 126 control operations of entire structures including the respective devices in the automatic analyzer 101.

The control section 125 is composed of a hardware substrate and a computer, for example, and has built-in devices including a storage device 127 such as the hard disk, and a control device 128.

The storage device 127 stores control parameters corresponding to the respective units, for example.

The control device 128 may be configured as a hardware by means of a dedicated circuit substrate, or a software to be executed by the computer. The control device may be configured as the hardware by integrating multiple arithmetic units for executing processing on the wiring substrate, the semiconductor chip, or in the package. The control device may be configured as the software by installing a high-speed general CPU in the computer to execute the program for the desired arithmetic processing. The recording medium that records the program allows upgrading of the existing device. Those devices, circuits, and the computer are mutually connected via the network either wiredly or wirelessly for appropriate data transmission/reception.

The operating device 126 is composed of a display device such as a display, and an input device such as a mouse and a keyboard.

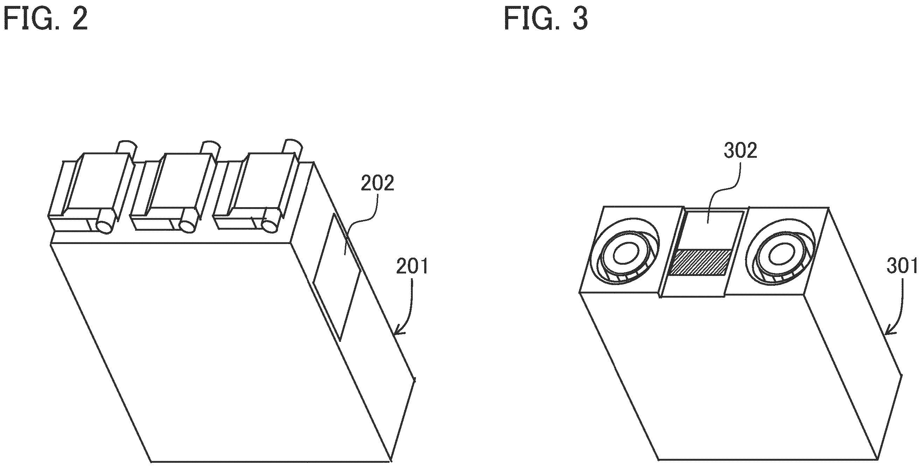

Figs. 2 and 3 illustrate an example of an identification piece applied to a reagent container.

As Figs. 2 and 3 illustrate, the assay reagent to be used for analysis, which is sealed in the reagent container is supplied to a user of the automatic analyzer 101. The reagent container 201 or 301 is provided with an identification piece 202 or 302, each having a reagent code (identification information) fixed for acquiring reagent information of the reagent sealed in the reagent container. The identification piece may be a tag (for example, Radio Frequency Identifier to be referred to as RFID) having the reagent code (identification information of the reagent) embedded. The reader 129 of the identification information may be a reader (RFID reader in this case) in accordance with the form of the identification piece. It is possible to employ the identification piece and the reader in other forms, for example, a barcode and a barcode reader.

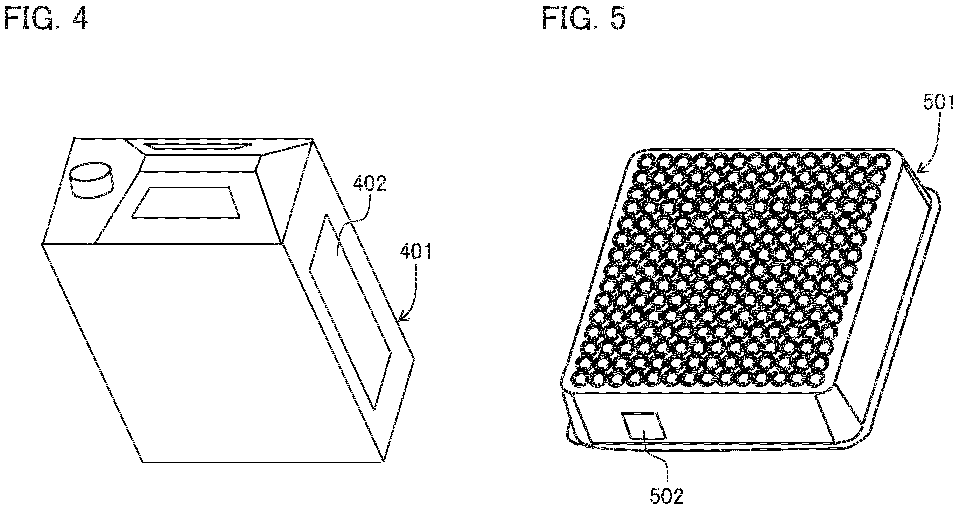

Fig. 4 illustrates an example of an identification piece applied to a system reagent container.

As Fig. 4 illustrates, the system reagent to be used for analysis, which is sealed in a system reagent container 401 is supplied to the user of the automatic analyzer 101. The system reagent container 401 is provided with an identification piece 402 having a reagent code (identification information) fixed for acquiring information about manufacturing of the system reagent sealed in the system reagent container 401. The identification piece 402 may be a tag (for example, RFID) having the manufacturing information embedded. The reader 130 of the identification information may be a reader (RFID reader in this case) in accordance with the form of the identification piece. It is possible to employ the identification piece and the reader in other forms, for example, a barcode and a barcode reader.

Fig. 5 illustrates an example of an identification piece applied to a reaction vessel tray.

As Fig. 5 illustrates, the reaction vessel to be used for analysis arranged and sealed in a reaction vessel tray 501 (corresponding to the reaction vessel tray 110 as illustrated in Fig. 1) is supplied to the user of the automatic analyzer 101. The reaction vessel tray 501 provided with the reaction vessels includes an identification piece 502 having a code (identification information) fixed for acquiring the manufacturing information of the reaction vessel. The identification piece 502 may be a tag (for example, RFID) having the manufacturing information embedded. The reader adapted to the form of the identification piece (RFID reader in this case) is used as the reader 130 of the identification information. It is possible to employ the identification piece and the reader in other forms, for example, a barcode and a barcode reader.

The automatic analyzer 101 of the present embodiment has reading modes including a first reading mode and a second reading mode, which can be selected in response to the predetermined condition. The first reading mode allows the reader 130 (first reader) to read the identification information of the system reagent container 401 and the reaction vessel tray 501 (first consumable), and the reader 129 (second reader) to read the identification information of the reagent container 201 for immunological analysis, and the reagent container 301 for biochemical analysis (second consumable). The second reading mode allows the reader 130 (first reader) to read identification information of both the first and the second consumables (that is, the system reagent container 401, the reaction vessel tray 501, the reagent container 201 for immunological analysis, and the reagent container 301 for biochemical analysis).

Described is a procedure for registering consumables such as the reagent to be used in the first reading mode of the automatic analyzer 101.

When the operator of the automatic analyzer 101 instructs registration of the assay reagent through the operating device 126, the control device 128 starts execution of reagent registration control based on the reagent registration command as instructed through the operating device 126. The dedicated reader 129 (second reader) reads the identification pieces 202 and 302 fixed onto the reagent containers 201 and 301, respectively, which are mounted on the reagent disc 106. The information is then stored in the storage device 127. After reading, the reagent disc 106 is rotated to perform the operation for reading the identification piece of the next reagent container. This operation is repeatedly performed to read identification information of all the reagent containers mounted on the reagent disc 106 so that the identification information is registered in the automatic analyzer 101.

Described is the procedure for registering consumables such as the system reagent and the reaction vessel in the first reading mode of the automatic analyzer 101.

After the operator of the automatic analyzer 101 instructs the consumable registration through the operating device 126 to select the mode that allows the automatic analyzer 101 to register the consumable, the dedicated reader 130 is allowed to read the identification piece 402 attached to the system reagent container 401 or the identification piece 502 attached to the reaction vessel tray 501. The read information is stored in the storage device, and registered in the automatic analyzer 101. The user mounts the system reagent container 401 and the reaction vessel tray 501 on the automatic analyzer 101 at the predetermined positions, respectively.

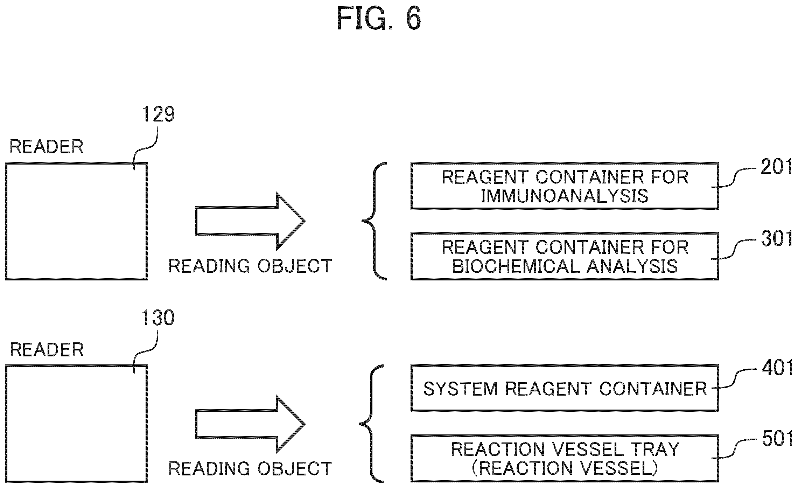

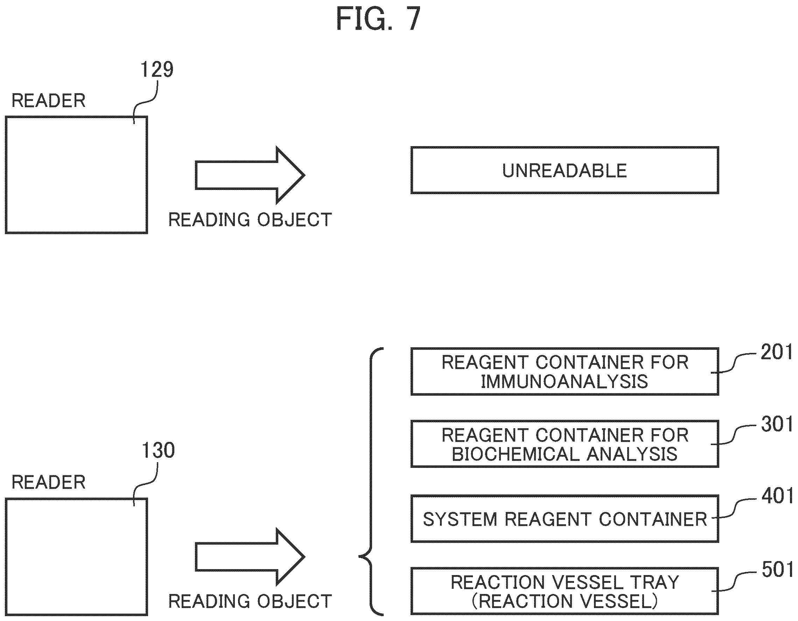

Fig. 6 illustrates a relationship between a reader and a reading object in a first reading mode. Fig. 7 illustrates a relationship between a reader and a reading object in a second reading mode.

As Fig. 6 illustrates, the first reading mode allows the reader 129 (second reader) to read the identification information of the reagent container 201 for immunological analysis, and the reagent container 301 (second consumable) for biochemical analysis, and allows the reader 130 (first reader) provided on the first surface of the automatic analyzer 101 to read the identification information of the system reagent container 401 and the reaction vessel tray 501 (first consumable).

Meanwhile, as Fig. 7 illustrates, the second reading mode does not allow the reader 129 (second reader) to read the identification information, and allows the reader 130 (first reader) provided on the front surface of the automatic analyzer 101 to read the identification information of the reagent container 201 for immunological analysis, the reagent container 301 for biochemical analysis, the system reagent container 401, and the reaction vessel tray 501 (the first and the second consumables).

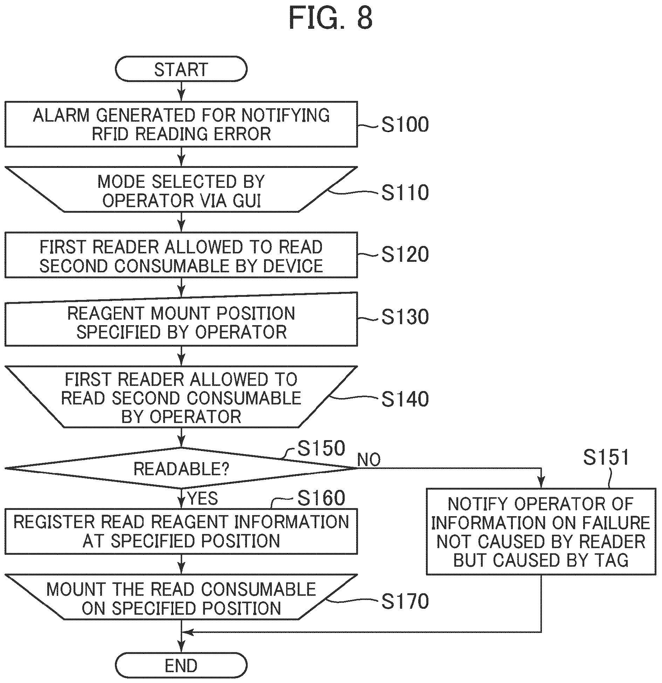

Fig. 8 is a flowchart representing content of a consumable registration process upon selection from the first reading mode to the second reading mode.

As Fig. 8 shows, when an alarm with respect to the reader 129 (second reader) is generated in response to an RFID reading error (step S100), the operator operates the operating device 126 to select the reading mode from the first reading mode to the second reading mode (step S110).

Based on the command input through the operating device 126, the control device 128 selects the state of the automatic analyzer 101 from the first reading mode to the second reading mode. This allows the reader 130 (first reader) to read the identification pieces 202, 203 of the reagent containers 201, 301, respectively, in addition to those of the first consumables such as the system reagent container 401 and the reaction vessel tray 501 (step S120).

The operator then operates the operating device 126 to specify positions of the reagent disc 106, on which the reagent containers 201 and 301 are mounted (step S130) to allow the reader 130 to read the identification pieces 202, 203 of the reagent containers 201, 301, respectively (step S140) .

It is determined whether or not the identification information of the identification pieces 202, 203 is readable by the reader 130, that is, whether or not the reading has been normally performed (step S150). If the determination result is NO, the display function of the operating device 126 displays the information which notifies the operator of the situation that the reading error in step S100 is not caused by the failure of the reader 129 (second reader), but caused by the failure of the identification pieces 202, 203 (step S151). The processing is then completed.

If the determination result in step S150 is YES, the identification information of the identification pieces 202, 203, which has been read by the reader 130 (second reader) is registered in the storage device 127 (step S160). The operator mounts the reagent containers 201, 301 subjected to reading of the identification information on the reagent disc 106 at the position specified in step S130 (step S170). The processing is then completed.

Advantageous effect of the above-configured embodiment is described.

The generally employed art is configured to restrict the respective reading targets of multiple readers for the purpose of simplifying the information registering operation. In the case where one of the readers fails to read the information because of the failure that occurs therein, operations of the automatic analyzer are obstructed. This may cause the problem of considerable deterioration in throughput for an analysis process.

The automatic analyzer of this embodiment is configured to have reading modes including the first reading mode and the second reading mode, one of which can be selected in response to the predetermined condition. The first reading mode allows the reader 130 (first reader) to read the identification information of the system reagent container 401 and the reaction vessel tray 501 (first consumables), and allows the reader 129 (second reader) to read the identification information of the reagent containers 201, 301 (second consumables). The second reading mode allows the first reader to read the identification information of both the first and the second consumables. This makes it possible to suppress stagnation of the identification information reading, and deterioration in throughput for the analysis process.

### <Second Embodiment>

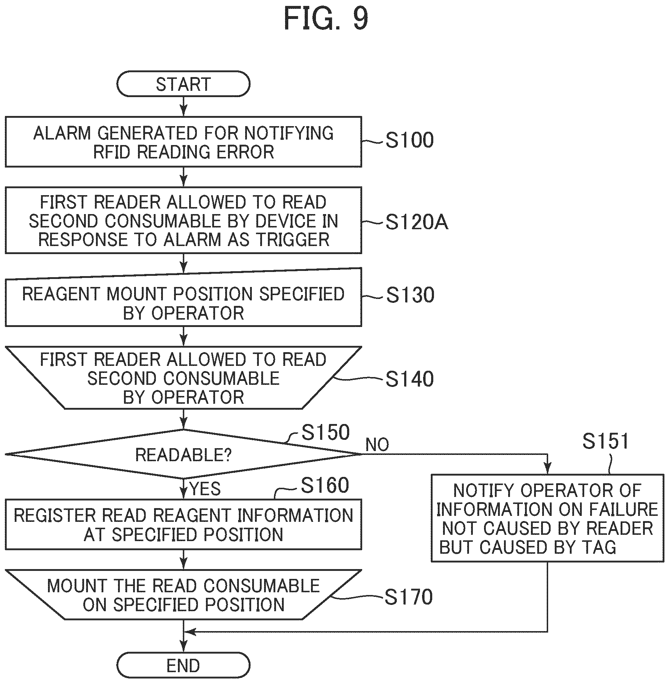

The second embodiment according to the present invention is described with reference to Fig. 9.

In this embodiment, the reading mode is automatically selected in response to occurrence of the reading error of the identification information. In this embodiment, structures explained in the description and the drawings, which are similar to those of the first embodiment will be followed by the same reference signs, and explanations of those structures will be omitted.

Fig. 9 is a flowchart representing content of a consumable registration process upon selection from the first reading mode to the second reading mode in a present embodiment.

As Fig. 9 shows, when an alarm with respect to the reader 129 (second reader) is generated in response to an RFID reading error (step S100), the reading error becomes the trigger that causes the control device 128 to select the state of the automatic analyzer 101 from the first reading mode to the second reading mode. This allows the reader 130 (first reader) to read the identification pieces 202, 203 of the second consumables such as the reagent containers 201, 301, respectively, in addition to those of the first consumables such as the system reagent containers 401 and the reaction vessel tray 501 (step S120A). In the processing executed in step S120A, the display function of the operating device 126 displays the information which notifies the operator of selection of the reading mode of the automatic analyzer 101 from the first reading mode to the second reading mode.

The operator then operates the operating device 126 to specify positions of the reagent disc 106, on which the reagent containers 201 and 301 are mounted (step S130) to allow the reader 130 to read the identification pieces 202, 203 of the reagent containers 201, 301, respectively (step S140) .

It is determined whether or not the identification information of the identification pieces 202, 203 is readable by the reader 130, that is, whether or not the reading has been normally performed (step S150). If the determination result is NO, the display function of the operating device 126 displays the information which notifies the operator of the situation that the reading error in step S100 is not caused by the failure of the reader 129 (second reader), but caused by the failure of the identification pieces 202, 203 (step S151). The processing is then completed.

If the determination result in step S150 is YES, the identification information of the identification pieces 202, 203, which has been read by the reader 130 (second reader) is registered in the storage device 127 (step S160). The operator mounts the reagent containers 201, 301 subjected to reading of the identification information on the reagent disc 106 at the position specified in step S130 (step S170). The processing is then completed.

Other structures are similar to those of the first embodiment.

The above-configured embodiment provides similar advantageous effects to those derived from the first embodiment.

### <Supplementary description>

The present invention is not limited to the embodiments as described above, but includes various modifications and combinations within a range without departing from the scope of the present invention.

The above-described embodiments have been exemplified by the use of the reader 129 provided for the reagent storage 150, and the reader 130 provided on the front surface of the automatic analyzer 101. The present invention, however, may be formed in the non-restrictive manner. Another structure may be configured to have two or more reagent storages (reagent discs) each provided with the identification information reader to allow selection between the reading mode in which each identification information of the reagent containers mounted on the reagent discs is read by the respective readers, and the reading mode in which the reader of one of the reagent storages (reagent discs) reads the identification information of all the reagent containers including the reagent container of the other reagent storage (reagent disc).

Three or more readers may be provided on the automatic analyzer 101.

The present invention is not limited to the one equipped with all structures as described above, but includes the one having a part of the structures removed. The respective structures and functions may be implemented through partial or entire designing by means of the integrated circuit, for example. The respective structures and functions may be implemented by the software through the processor that interprets and executes the program for implementing the respective functions.

### List of Reference Signs

101 automatic analyzer, 102 sample mount disc, 103 sample container, 104 sample dispensing mechanism, 105 reagent storage, 106 reagent disc, 107 reagent container holder, 108 reagent dispensing mechanism, 109 incubator, 110 reaction vessel tray, 111 biochemical detection unit, 125 control section, 126 operating device, 127 storage device, 128 control device, 129 reader, 130 reader, 130a reading range, 131 consumable, 150 reagent storage, 201 reagent container, 202 identification piece, 203 identification piece, 301 reagent container, 302 identification piece, 401 system reagent container, 402 identification piece, 501 reaction vessel tray, 502 identification piece

## Claims

1. An automatic analyzer for executing an analysis process using multiple kinds of consumables including a first consumable and a second consumable, the automatic analyzer comprising:
multiple readers including a first reader and a second reader, which are allowed to read identification information of the consumable; and
a control section for controlling an operation of the automatic analyzer, wherein the control section has a first reading mode which allows the first reader to read identification information of the first consumable, and the second reader to read identification information of the second consumable, and has a second reading mode which allows the first reader to read identification information of both the first and the second consumables.

2. The automatic analyzer according to claim 1, wherein the control section performs selection between the first reading mode and the second reading mode in response to an operation of an operator.

3. The automatic analyzer according to claim 1, wherein a determination is made with respect to readability of the second reader, and when it is determined that the second reader is in an unreadable state, the control section performs selection from the first reading mode to the second reading mode.

4. A method of controlling an automatic analyzer for executing an analysis process using multiple kinds of consumables including a first consumable and a second consumable, wherein:
a selection is performed between a first reading mode and a second reading mode;
in the first reading mode, among multiple readers including a first reader and a second reader, which are capable of reading identification information of the consumable, the first reader reads identification information of the first consumable, and the second reader reads identification information of the second consumable; and
in the second reading mode, the first reader reads the identification information of both the first and the second consumables.
